# EUROPEAN PATENT SPECIFICATION

(11) **EP 0 941 195 B1**
(45) Date of publication and mention of the grant of the patent: **16.04.2003**
(21) Application number: 97948090.2
(22) Date of filing: 05.12.1997
(51) Int. Cl.: B62D 33/02, B60J 7/10, B60P 7/04

(54) **STANCHION FOR VEHICLE LOAD PLATFORM**
RUNGE FÜR LADEPLATTFORM VON FAHRZEUGEN
POTEAU POUR PLATE-FORME DE CHARGEMENT DE VEHICULES

(30) Priority: 05.12.1996 SE 9604504
(43) Date of publication of application: 15.09.1999
(73) Proprietor: Rosén, Göran, 640 50 Björnlunda (SE)
(72) Inventor: Rosén, Göran, 640 50 Björnlunda (SE)
(74) Representative: Hammond, Andrew David
(86) International application number: SE9702042
(87) International publication number: WO98024679

(56) References cited:
- EP-A- 0 335 427
- WO-A-92/00869
- FR-A- 2 523 906
- FR-A- 2 667 283

## Description

The present invention relates to a stanchion for a vehicle load platform which stanchion is releasably connected to the platform at its lower end and is connected to a frame part being a part of a stand for carrying a weather protection at its other, upper end; the stanchion is fixable to a stanchion holder at the platform edge via a manoeuvring arm in the form of a double armed lever which is pivotably mounted in the stanchion by means of a shaft journal; at the one end of the manoeuvring arm a supporting member is connected, which member is arranged to cooperate with the stanchion holder; the stanchion is provided with a locking device at its lower end, which device is designed to be brought out of or into connection, respectively, with a locking surface by means of the manoeuvring arm at the stanchion holder at a displacement of the stanchion in its longitudinal direction.

### Background of the invention and the problem to be solved

Displaceable stanchions for vehicle platforms of the type described above and in accordance with the preamble of claim 1 are previously known from EP-A-0 335 427. At this embodiment the platform edge is designed with a track extending along said edge, against which track the supporting member of the stanchion rests and along which track the stanchion can be displaced. A disadvantage using such a construction is that it does not stand major loads from the inside of the platform. If the goods on the platform should be displaced against the stanchion at a transport, no larger forces are needed to bring the supporting member to be released form the track and to straighten the hook which catches underneath the platform edge.

The document WO-A-9200869 describes a device at a stanchion provided with a locking mechanism according to prior art.

### The object of the invention and the solution of the problem

The object of the invention is to obtain:
* a simple and reliable construction;
* which withstand high side loads, both from the inside as well as from the outside
* which in its active, vertical position obtains support from the platform edge, and
* the manoeuvring arm of which adopts a stabile, safe position.

These tasks have been solved by the features of the characterising portion of claim 1.

### Description of the drawings

The invention will be described more in detail in the following with reference to the accompanying drawing which shows one embodiment.

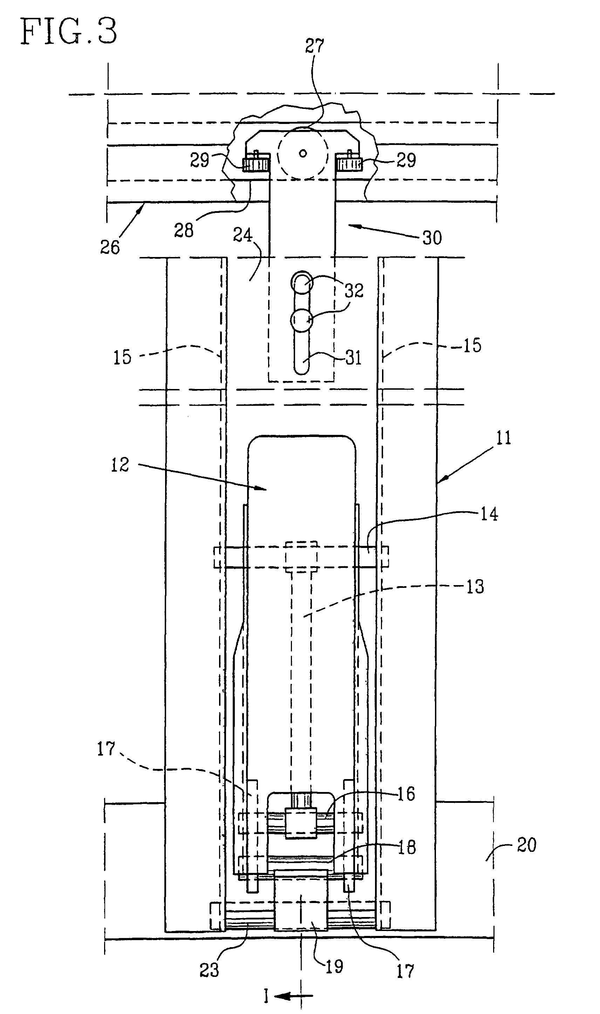

FIG. 1 shows a cross-section along the line I-I of Fig. 3 of a stanchion according to the invention, having a hinged manoeuvring arm,
FIG. 2 is a cross-section analogous to that of Fig. 1 of a stanchion having a downwardly hinged manoeuvring arm,
FIG. 3 shows a front view of a stanchion according to Fig. 1,

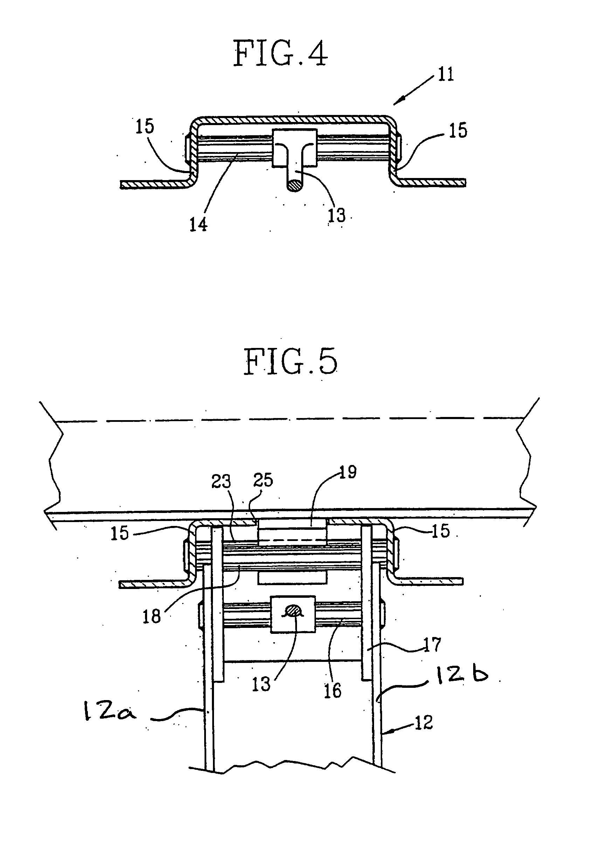

FIG. 4 is a cross-section according to line IV-IV of Fig. 2, and
FIG. 5 is a cross-section according to line V-V of Fig. 2.

### Description of an embodying example

The stanchion of the invention, having been denoted with 11 in the drawings, is provided with a pivotable manoeuvring arm 12 at its lower end, which arm is articulately connected to the stanchion via a link 13. One of the upper flexible axles of the link is a shaft journal 14 connected the side flanges 15 of the stanchion 11 while the lower flexible axle of the link is a pivoting shaft 16 affixed to the side legs 17 of the manoeuvring arm. At some distance from the pivoting shaft 16 there is a supporting member 18 arranged between the legs 17, which member is designed to cooperate with the upper side 33 of a stanchion holder 19 which is fixedly arranged at the side edge 20 of a load platform 21. At the underside of the stanchion holder 19 there is arranged a concave locking surface 22 which is intended to cooperate with a locking device 23 being fixedly at the lower end of the stanchion between the flanges 15. In the rear part 24 of the stanchion an opening 25 is provided at the lower end thereof, through which opening the stanchion holder 19 can be brought when the stanchion is applied to the platform edge 20. The upper side 33 of the stanchion holder has an inclined plane relative to the side edge 20 of the platform, which plane transcends into a rounded edge towards the front edge. This inclined upper side is intended to provide a breaking action to the supporting member 18 and thereby the manoeuvring arm 12.

In another embodiment of the stanchion according to the invention, the support surface is designed to transcend into an elevated riblike part at the end opposite the platform edge. The stanchion may be arranged at or below the platform edge so that the stanchion is supported thereby in an upright position.

At the upper end thereof the stanchion is suspended into a frame part 26 of stand (not shown) which frame part is intended to carry a weather protection, e.g., a cover. The suspension means 30 of the stanchion 11 consists of a roll 27 which is movable along a guiding rail 28 at the lower end part of the frame part 26. Two supporting rolls 29 keep the roll 27 in place in the guiding rail 28. The suspension means 30 of the stanchion 11 is movably connected to the upper part of the stanchion, which has been made possible as the connecting means between the upper parts of the suspension means and the stanchion allows a relative movement between the parts. This has been obtained by means of a slot 31 of the rear part 24 which slot is passed through by two bolts 32 or the similar.

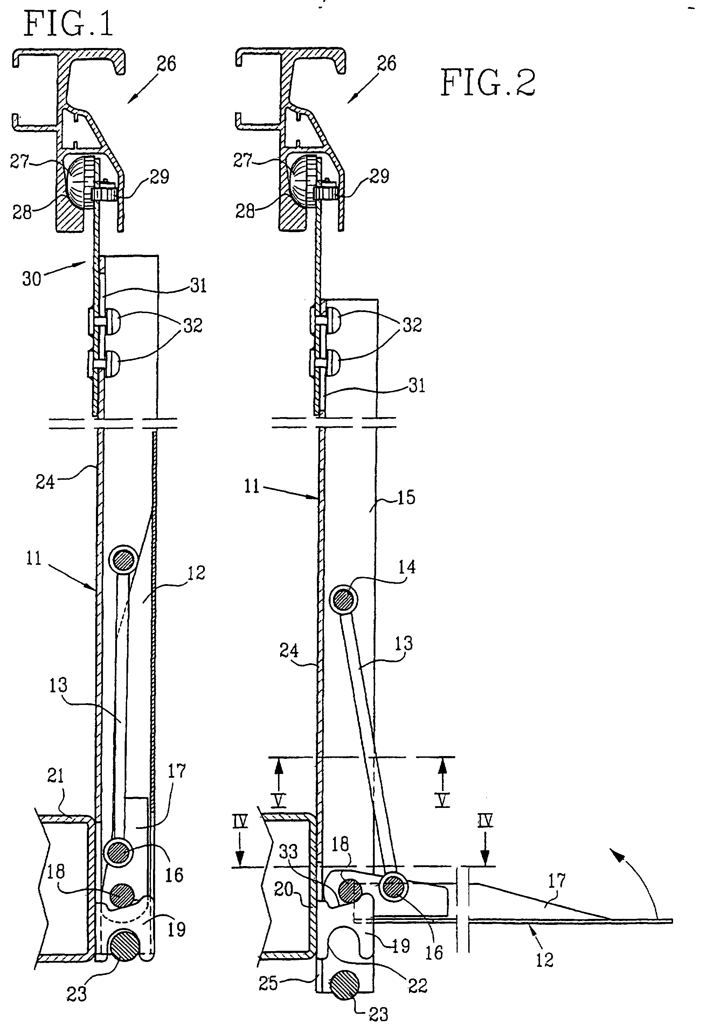

The stanchion is applied against the platform, 21 having the manoeuvring arm 12 in the downwardly directed position shown in Fig. 2. In this position the stanchion is suspended in the frame part 26 and can be swinged out from the edge 20 of the platform and be displaced along the guiding rail 28 to a parking position where the stanchion is out of its way during loading. If the stanchion should be attached to the platform edge it will be so displaced that the opening 25 of the lower part of the stanchion will be placed right opposite to the stanchion holder 19, in order to allow this to be brought through the opening. The supporting member 18 of the manoeuvring arm will thereby rest upon the upper side of the stanchion holder and by swinging the manoeuvring arm in the direction towards the stanchion this will raise in such a way that the locking means 23 is brought into the concave locking surface 22 on the underneath side of the stanchion holder 19.

The displacement movement of the stanchion in its longitudinal direction does not affect the suspension means 30 as the slot 31 allows the relative displacement movement.

In order to obtain a resting position of the upraised manoeuvring arm 12 the shaft journal 16 is arranged within a vertical center line through the supporting member 18 and the locking device 23 when the manoeuvring arm is in its upright position according to Fig. 1§. The centre of the pivoting shaft 16 has then passed over and by the dead point and will thus take a stable position.

## Claims

1. A stanchion (11) for a vehicle load platform (21),
which stanchion is releasably connected to the platform at its lower end and is connected to a frame part (26) for carrying a weather protection, said
stanchion (11) being fixable to a stanchion holder (19) at the platform edge (20) via a manoeuvring arm (12) in the form of a double armed lever (12a, 12b) which is pivotably mounted in the stanchion (11) by means of a shaft journal (14), and
at the one end of the manoeuvring arm (12) a supporting member (18) is connected, which member is arranged to cooperate with the stanchion holder (19), said
stanchion being provided with a locking device (23) at its lower end, which device is designed to be brought out of or into connection, respectively, with a locking surface (22) by means of the manoeuvring arm at the stanchion holder at a displacement of the stanchion in its longitudinal direction, and at least the lower part of the stancion (11) is made with a U-shaped cross section,
**characterized in**
**that** the pivoting shaft (16) of the manoeuvring arm (12) is mounted at one end of a link (13), and
the opposite end of the link is mounted in said shaft journal (14),
the locking surface of the stanchion holder (19) is designed as a downwardly open fork to cooperate with the locking device (23) of the stanchion (11), and
**that** the locking device (23) is fixedly arranged between the side flanges of the U-shaped stanchion.

2. Stanchion according to claim 2,
**characterized in**
**that** the upper side of the stanchion holder (19) cooperating with its supporting member (18) is designed with a supporting surface (33) being inclined in the direction downwardly towards the platform edge (20).

3. Stanchion according to claim 2,
**characterized in**
**that** the supporting surface (33) is designed to transcend into an elevated riblike part at the end opposite the platform edge (20).

4. Stanchion according to claim 1,
**characterized in**
**that** the center of the pivoting shaft (16) of the manoeuvring arm (12) is situated within a line between the center of the shaft journal (14) and the center of the supporting member (18) when the manoeuvring arm is in an upright position.

5. Stanchion according to claim 1,
**characterized in**
**that** the stanchion holder (19) is arranged at or below the platform edge (20) so that the stanchion (11) is supported thereby in an upright position.

## Patentansprüche

1. Runge (11) für eine Fahrzeug-Ladeplattform (21), wobei die Runge (11) freigebbar mit der Plattform (21) an ihrem unteren Ende verbunden und mit einem Rahmenteil (26) zum Tragen eines Wetterschutzes verbunden ist, wobei die Runge (11) an einem Rungehalter (19) am Plattformrand (20) über einen Manövrierarm (12) in Gestalt eines Doppelarmhebels (12a, 12b) fucierbar ist, der an der Runge (11) mittels eines Wellenzapfens (14) schwenkbeweglich angebracht ist, und wobei an einem Ende des Manövrierarmes (12) ein Abstützelement (18) angeschlossen ist, das zum Zusammenwirken mit dem Rungehalter (19) angeordnet ist, wobei die Runge (11) an ihrem unteren Ende mit einer Arretiervorrichtung (23) versehen ist, die derartig ausgebildet ist, daß sie mit einer Arretierfläche (22) mittels des Arretierarms (12) am Rungehalter (19) bei einer Verstellung der Runge (11) in ihrer Längsrichtung verbindbar oder von dieser freigebbar ist, und wobei zumindest der untere Abschnitt der Runge (11) mit einem U-förmigen Querschnitt ausgebildet ist,
**dadurch gekennzeichnet,**
**daß** die Schwenkachse (16) des Manövrierarms (12) an einem Ende eines Bindegliedes (13) angebracht ist, daß das gegenüberliegende Ende des Bindegliedes (13) in dem Wellenzapfen (14) angebracht ist, daß die Arretierfläche (22) des Rungehalters (19) als eine mit der Arretiervorrichtung (23) der Runge (11) zusammenwirkende, nach unten offene Gabel ausgebildet ist, und daß die Arretiervorrichtung (23) fest zwischen den Seitenflanschen der U-förmigen Runge (11) angebracht ist.

2. Runge nach Anspruch 1,
**dadurch gekennzeichnet,**
**daß** die mit dem Abstützelement (18) zusammenwirkende obere Seite des Rungehalters (19) mit einer Abstützfläche (33) ausgebildet ist, die in Richtung zum Plattformrand (20) hin nach unten geneigt ist.

3. Runge nach Anspruch 1,
**dadurch gekennzeichnet,**
**daß** die Abstützfläche (33) derartig ausgebildet ist, daß sie ein erhabenes Rippenteil an dem dem Plattformrand (20) gegenüberliegenden Ende übersteigt.

4. Runge nach Anspruch 1,
**dadurch gekennzeichnet,**
**daß** das Zentrum der Schwenkachse (16) des Manövrierarms (12) sich in einer Linie zwischen dem Zentrum des Wellenzapfens (14) und dem Zentrum des Abstützelementes (18) befindet, wenn sich der Manövrierarm (12) in einer aufrechten Position befindet.

5. Runge nach Anspruch 1,
**dadurch gekennzeichnet,**
**daß** der Rungehalter (19) an oder unter dem Plattformrand (20) angeordnet ist, so daß die Runge (11) dadurch in einer aufrechten Position gehalten wird.

## Revendications

1. Poteau (11) pour plate-forme de chargement de véhicules (21), lequel poteau est relié de manière libérable à la plate-forme à son extrémité inférieure et relié à une partie de châssis (26) destiné à supporter une protection contre les intempéries, ledit poteau (11) pouvant être fixé à un porte poteau (19) au niveau du bord de plate-forme (20) via un bras de manoeuvre (12) ayant la forme d'un levier à deux bras (12a, 12b) qui est monté de manière pivotante dans le poteau (11) par l'intermédiaire d'un tourillon d'arbre (14), et à la première extrémité du bras de manoeuvre (12) est relié un élément de support (18), lequel élément est agencé pour coopérer avec le support de poteau (19), ledit poteau étant muni d'un dispositif de blocage (23) à son extrémité inférieure, lequel dispositif est conçu pour être amené en dehors de la connexion ou en connexion, respectivement, avec une surface de blocage (22) par l'intermédiaire du bras de manoeuvre situé au niveau du support de poteau par un déplacement du poteau dans sa direction longitudinale, et au moins la partie inférieure du poteau (11) est constituée d'une section transversale en forme de U, **caractérisé en ce que** l'arbre de pivotement (16) du bras de manoeuvre (12) est monté à une extrémité d'une biellette (13), et l'extrémité opposée de la biellette est montée sur ledit tourillon d'arbre (14), la surface de blocage du support de poteau (19) est conçue sous la forme d'une fourche ouverte vers le bas pour coopérer avec le dispositif de blocage (23) du poteau (11), et **en ce que** le dispositif de blocage (23) est agencé de manière fixe entre les flancs latéraux du poteau en forme de U.

2. Poteau selon la revendication 1, **caractérisé en ce que** le côté supérieur du support de poteau (19) coopérant avec son élément de support (18) est conçu ayant une surface de support (33) qui est inclinée dans la direction vers le bas en direction du bord de plate-forme (20).

3. Poteau selon la revendication 2, **caractérisé en ce que** la surface de support (33) est conçue pour se transformer en une partie analogue à une nervure surélevée à l'extrémité opposée par rapport au bord de plate-forme (20).

4. Poteau selon la revendication 1, **caractérisé en ce que** le centre de l'arbre de pivotement (16) du bras de manoeuvre (12) est situé sur une ligne passant par le centre du tourillon d'arbre (14) et le centre de l'élément de support (18) lorsque le bras de manoeuvre est dans une position verticale.

5. Poteau selon la revendication 1, **caractérisé en ce que** le support de poteau (19) est agencé au niveau du bord de plate-forme (20) ou en dessous de celui-ci de sorte que le poteau (11) est supporté ainsi dans une position verticale.
